# EUROPEAN PATENT APPLICATION

(11) **EP 2 919 520 A1**
(43) Date of publication of application: **16.09.2015**
(21) Application number: 13854093.5
(22) Date of filing: 04.10.2013
(51) Int. Cl.: H04W 36/08, H04W 72/04, H04W 92/20

(54) **RADIO COMMUNICATION SYSTEM AND COMMUNICATION CONTROL METHOD**

(30) Priority: 08.11.2012 JP 2012246313
(71) Applicant: NTT DOCOMO, INC., Chiyoda-ku Tokyo 100-6150 (JP)
(72) Inventor: YASUDA, Hiroto, Tokyo 100-6150 (JP); MORIOKA, Yasufumi, Tokyo 100-6150 (JP); KIM, Jinho, Tokyo 100-6150 (JP); TAKAHASHI, Hideaki, Tokyo 100-6150 (JP); OKUMURA, Yukihiko, Tokyo 100-6150 (JP); ISHII, Hiroyuki, Palo Alto, California 94304 (US)
(74) Representative: Hoffmann Eitle
(86) International application number: PCT/JP2013/077092
(87) International publication number: WO 2014/073302

(57) **Abstract**

A radio communication system includes a user device, a first base station, a second base station, a third base station, a gateway device, and a switching center. A user-plane path is established between the user device and the gateway device via the third base station. When the user device is handed over from the first base station to the second base station, the first base station adds an identifier of the third base station to a handover request message and transmits the handover request message to the second base station. The second base station transmits, to the third base station, a base station switch notification message that indicates that a radio connection destination for the user device has been switched to the second base station.

## Description

### TECHNICAL FIELD

The present invention relates to radio communication systems and to communication control methods.

### BACKGROUND ART

A variety of radio communication systems that operate in accordance with 3GPP (Third Generation Partnership Project) protocols are used in the art. In a radio communication system that operates in accordance with LTE/SAE (Long Term Evolution/System Architecture Evolution) protocols specified by 3GPP, there is established between a user device and a gateway device via a radio base station a user-plane path, which is a logical communication path for communicating user data. The user-plane path is controlled (e.g., established, switched, released) by a switching center (mobility management entity, MME) in the radio communication system through a control-plane path, which is a logical communication path for communicating control data.

In a radio communication system that operates in accordance with conventional LTE protocols, an eNB (evolved Node B) is used as a radio base station that can communicate directly with a user device by radio. The eNB has a control-plane path to each of the switching center, another eNB, and the user device. The eNB to which the user device is currently connected exchanges, when the user device moves to a cell formed by the other eNB, control messages with the user device and with the other eNB through the respective control-plane paths so as to cause the user device to be handed over to the other eNB.

### Related Art Document

### Non-Patent Document

Non-Patent Document 1: 3GPP TS 36.300 V10.6.0 (2011-12), 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10).

### SUMMARY OF THE INVENTION

### Problem to be Solved by the Invention

In a radio communication system such as that described above, it is assumed that a control-plane path and a user-plane path can be established independently (i.e., can be established via different devices). The radio communication system is assumed to include, in addition to an eNB such as that described above, a base station (a limited control function base station) that does not have some control-plane paths (e.g., does not have control-plane paths to user devices). The limited control function base station exchanges control messages indirectly with a user device via the eNB.

In the radio communication system in which control-plane paths and user-plane paths are independent of each other, there is a possibility that only a control-plane path between a user device and the eNB will be switched (handover involving the control-plane path alone is performed) and a user-plane path established for the user device via the limited control function base station will be maintained. Because conventional LTE protocols do not include a protocol that covers such a situation, it may be difficult for the limited control function base station to recognize an eNB to which the user device newly establishes a connection during handover involving the control-plane path alone.

As will be understood from the above description, in a radio communication system in which a user-plane path is established via a limited control function base station, after handover involving a control-plane path alone has been performed, the limited control function base station may not be able to appropriately control other devices such as a user device in the radio communication system.

In light of the situation described above, an object of the present invention is to appropriately control a radio communication system in which a logical path is established via a limited control function base station.

### Means of Solving the Problems

A radio communication system according to the present invention includes: a user device; base stations that include a first base station, a second base station, and a third base station, the first base station and the second base station exchanging control messages through control-plane paths that are logical paths established to the user device, the third base station having no control-plane path to the user device; a gateway device; and a switching center that controls the logical paths. A first control-plane path is established between the first base station and the user device, and a user-plane path is established between the user device and the gateway device via the third base station. The first base station includes: a determining unit that determines whether the user device should be handed over from the first base station, to which the user device is currently connected by radio, to the second base station; and a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station. The second base station includes: a storage unit that stores the identifier of the third base station received from the first base station; and a base station control unit that transmits, in response to receipt of the handover request message from the first base station, a handover response message to the first base station. The first base station further includes: a radio control unit that transmits, after receipt of the handover response message from the second base station, a radio connection reconfiguration message to the user device, the radio connection reconfiguration message instructing establishment of a second control-plane path between the second base station and the user device. The user device includes: a radio configuration unit that configures the user device, in accordance with the received radio connection reconfiguration message, such that the second control-plane path is established; and a transmitting unit that transmits, after the radio configuration unit has configured the user device, a radio connection reconfiguration completion message to the second base station. The base station control unit of the second base station, after receipt of the radio connection reconfiguration completion message from the user device, transmits a base station switch notification message to the third base station indicated by the identifier stored in the storage unit of the second base station, the base station switch notification message indicating that a radio connection destination for the user device has been switched from the first base station to the second base station. The third base station includes a base station control unit that transmits, in response to receipt of the base station switch notification message from the second base station, a base station switch acknowledgment message to the second base station.

In a preferred embodiment of the present invention, the base station switch notification message includes an identifier that identifies the user device, and an identifier that identifies the second base station.

In another preferred embodiment of the present invention, the second base station further includes a path control unit that transmits, in response to receipt of the radio connection reconfiguration completion message from the user device, a path switch message to the switching center, the path switch message indicating that the second control-plane path has been established between the user device and the second base station. The switching center includes a path control unit that transmits, after receipt of the path switch message, a path switch acknowledgment message to the second base station. The base station control unit of the second base station, in response to receipt of the path switch acknowledgment message from the switching center, transmits the base station switch notification message to the third base station indicated by the identifier stored in the storage unit of the second base station.

In yet another preferred embodiment of the present invention, the base station control unit of the second base station, in response to receipt of the radio connection reconfiguration completion message from the user device, transmits the base station switch notification message to the third base station indicated by the identifier stored in the storage unit of the second base station. The base station control unit of the third base station, in response to receipt of the base station switch notification message from the second base station, transmits the base station switch acknowledgment message to the second base station. The second base station further includes a path control unit that transmits, in response to receipt of the base station switch acknowledgment message from the third base station, a path switch message to the switching center, the path switch message indicating that the second control-plane path has been established between the user device and the second base station. The switching center includes a path control unit that transmits, after receipt of the path switch message, a path switch acknowledgment message to the second base station.

Each of the preferred embodiments described in the following can be combined with any of the radio communication systems of the present invention according to the preferred embodiments described above.

In a preferred embodiment of the present invention, the first base station further includes a transferring unit. If a control message for the user device is received from the third base station after the radio communication unit of the first base station has transmitted the radio connection reconfiguration message to the user device, the transferring unit transfers the control message to the second base station.

In a preferred embodiment of the present invention, the first base station further includes a redirecting unit. If a control message for the user device is received from the third base station after the radio communication unit of the first base station has transmitted the radio connection reconfiguration message to the user device, the redirecting unit adds to a redirect message an identifier that indicates the second base station, and transmits the redirect message to the third base station, the redirect message instructing that the control message be transmitted to the second base station.

In a preferred embodiment of the present invention, the radio communication system further includes a fourth base station that has no control-plane path to the user device and coordinates with the third base station to communicate by radio with the user device. The base station control unit of the second base station, after receipt of the radio connection reconfiguration completion message from the user device, transmits a base station switch notification message to the fourth base station, the base station switch notification message indicating that the radio connection destination for the user device has been switched from the first base station to the second base station.

In a preferred embodiment of the present invention, the radio communication system further includes a fourth base station that has no control-plane path to the user device and coordinates with the third base station to communicate by radio with the user device. The base station control unit of the third base station, in response to receipt of the base station switch notification message from the second base station, transmits the base station switch notification message to the fourth base station.

Another radio communication system according to the present invention includes: a user device; base stations that include a first base station, a second base station, and a third base station, the first base station and the second base station exchanging control messages through control-plane paths that are logical paths established to the user device, the third base station having no control-plane path to the user device; a gateway device; and a switching center that controls the logical paths. A first control-plane path is established between the first base station and the user device, and a user-plane path is established between the user device and the gateway device via the third base station. The first base station includes: a determining unit that determines whether the user device should be handed over from the first base station, to which the user device is currently connected by radio, to the second base station; and a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station. The second base station includes: a storage unit that stores the identifier of the third base station received from the first base station; and a base station control unit that transmits, in response to receipt of the handover request message from the first base station, a handover response message to the first base station and transmits a base station switch notification message to the third base station indicated by the identifier, the base station switch notification message indicating that a radio connection destination for the user device is to be switched from the first base station to the second base station. The third base station includes: a base station control unit that transmits, in response to receipt of the base station switch notification message from the second base station, a base station switch acknowledgment message to the second base station. The first base station further includes: a radio control unit that transmits, after receipt of the handover response message from the second base station, a radio connection reconfiguration message to the user device, the radio connection reconfiguration message instructing establishment of a second control-plane path between the second base station and the user device. The user device includes: a radio configuration unit that configures the user device, in accordance with the received radio connection reconfiguration message, such that the second control-plane path is established; and a transmitting unit that transmits, after the radio configuration unit has configured the user device, a radio connection reconfiguration completion message to the second base station.

Yet another radio communication system according to the present invention includes: a user device; base stations that include a first base station, a second base station, and a third base station, the first base station and the second base station exchanging control messages through control-plane paths that are logical paths established to the user device, the third base station having no control-plane path to the user device; a gateway device; and a switching center that controls the logical paths. A first control-plane path is established between the first base station and the user device, and a user-plane path is established between the user device and the gateway device via the third base station. The first base station includes: a determining unit that determines whether the user device should be handed over from the first base station, to which the user device is currently connected by radio, to the second base station; and a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station. The second base station includes: a storage unit that stores the identifier of the third base station received from the first base station; and a base station control unit that transmits, in response to receipt of the handover request message from the first base station, a handover response message to the first base station. The base station control unit of the first base station, in response to receipt of the handover response message from the second base station, transmits a base station switch notification message to the third base station, the base station switch notification message indicating that a radio connection destination for the user device is to be switched from the first base station to the second base station. The third base station includes: a base station control unit that transmits, in response to receipt of the base station switch notification message from the first base station, a base station switch acknowledgment message to the first base station. The first base station further includes: a radio control unit that transmits, after receipt of the handover response message from the third base station, a radio connection reconfiguration message to the user device, the radio connection reconfiguration message instructing establishment of a second control-plane path between the second base station and the user device. The user device includes: a radio configuration unit that configures the user device, in accordance with the received radio connection reconfiguration message, such that the second control-plane path is established; and a transmitting unit that transmits, after the radio configuration unit has configured the user device, a radio connection reconfiguration completion message to the second base station.

The present invention relating to the radio communication systems above can be understood as an invention of communication control methods for the operations (steps) performed by each element in the radio communication systems.

### Effect of the Invention

In the configurations described above, the third base station, which does not have a control-plane path to the user device, can recognize, on the basis of the base station switch notification message transmitted from the first base station or the second base station, that the control-plane radio connection destination for the user device has been switched to the second base station after handover is performed. Consequently, even after the control-plane handover has been performed, the third base station can transmit a control message to the user device indirectly (i.e., via the second base station). As a result, the radio communication systems can be controlled appropriately even after the control-plane handover has been performed.

### BRIEF DESCRIPTION OF THE DRAWINGS

FIG. 1 is a block diagram illustrating a radio communication system according to a first embodiment of the present invention;
FIG. 2 is a diagram describing a protocol structure of the radio communication system;
FIG. 3 is a diagram illustrating an overview of C/U-plane split (details described later) handover operation;
FIG. 4 is an operation flow illustrating an example of the C/U-plane split handover operation according to the first embodiment;
FIG. 5 is an operation flow illustrating a modification of the C/U-plane split handover operation according to the first embodiment;
FIG. 6 is a block diagram illustrating a configuration of a user device according to the first embodiment;
FIG. 7 is a block diagram illustrating a configuration of a first base station and a second base station according to the first embodiment;
FIG. 8 is a block diagram illustrating a configuration of a third base station according to the first embodiment;
FIG. 9 is a block diagram illustrating a configuration of a switching center according to the first embodiment;
FIG. 10 is a block diagram illustrating a configuration of a gateway device according to the first embodiment;
FIG. 11 is an operation flow illustrating an example of C/U-plane split handover operation according to a second embodiment;
FIG. 12 is an operation flow illustrating a modification of the C/U-plane split handover operation according to the second embodiment;
FIG. 13 is a block diagram illustrating a configuration of a first base station according to a modification;
FIG. 14 is a block diagram illustrating another configuration of the first base station according to the modification;
FIG. 15 is a drawing illustrating an example of a configuration of cells formed by base stations;
FIG. 16 is a schematic diagram illustrating a configuration of a radio communication system according to a modification;
FIG. 17 is an operation flow illustrating a part of C/U-plane split handover operation according to the modification; and
FIG. 18 is an operation flow illustrating a part of the C/U-plane split handover operation according to the modification.

### MODES FOR CARRYING OUT THE INVENTION

### 1. First Embodiment

### 1(1). Configuration of Radio Communication System

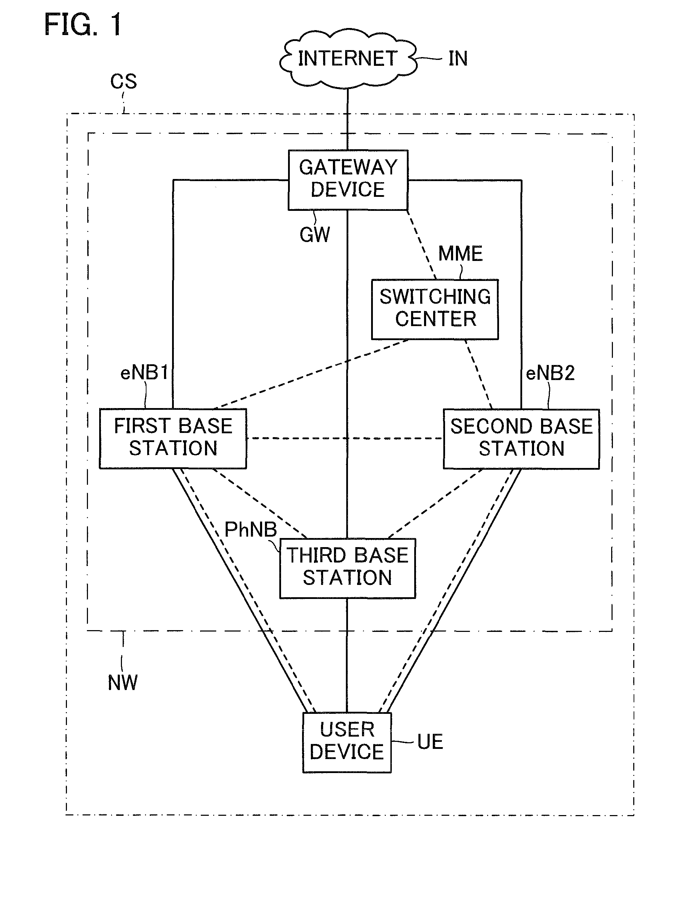

FIG. 1 is a block diagram illustrating a radio communication system CS according to a first embodiment of the present invention. The radio communication system CS includes, as its elements, a user device UE, a first base station eNB1, a second base station eNB2, a third base station PhNB, a switching center MME, and a gateway device GW. A network NW includes all the above-mentioned elements that are included in the radio communication system CS, except for the user device UE.

Each element in the radio communication system CS performs communication in accordance with a predetermined access technology, e.g., LTE/SAE (Long Term Evolution/System Architecture Evolution) specified in the 3GPP (Third Generation Partnership Project) protocols. In accordance with terms specified in the 3GPP protocols, the user device UE is a User Equipment, the first base station eNB 1 and the second base station eNB2 are each an evolved Node B, the switching center MME is a Mobile Management Entity, and the gateway device GW is a Packet-Data-Network/Serving Gateway, i.e., an SAE gateway. The third base station PhNB is a base station whose control functions depend entirely or partly on an eNB (the first base station eNB, the second base station eNB2, etc.) (details below).

In the present embodiment, while the radio communication system CS basically operates in accordance with LTE/SAE, the technical scope of the present invention is not limited thereto. The present invention can be used with other access technologies with design modifications, as necessary.

The user device UE can communicate by radio with the first base station eNB1, the second base station eNB2, and the third base station PhNB. A scheme for radio communication between the user device UE and each of the base stations (eNB, PhNB) can be chosen freely. For example, OFDMA (Orthogonal Frequency Division Multiple Access) may be adopted for downlink, whereas SC-FDMA (Single-Carrier Frequency Division Multiple Access) may be adopted for uplink. The first base station eNB and the second base station PhNB may use different schemes for radio communication.

FIG. 1 illustrates a configuration of connections between devices in the network NW. As illustrated, the base stations (eNB1, eNB2, and PhNB) are interconnected. The switching center MME is connected to the eNBs (the first base station eNB1 and the second base station eNB2) and to the gateway device GW. The gateway device GW is connected to an internet IN that is an external network of the radio communication system CS, as well as to each of the base stations (eNB1, eNB2, and PhNB) and to the switching center MME. That is, the gateway device GW serves as a connecting point (an access point) to the external network. The above-described connections between devices are typically wired connections, but all or a part of them may be radio connections.

### 1(2). Exchange of User Signals and Control Signals

Description of exchange of user signals and that of control signals in the radio communication system CS is given. In FIG. 1, solid lines indicate paths used to exchange user signals (signals that indicate user data such as audio signals and data signals) and dashed lines indicate paths used to exchange control signals. In other words, the solid lines indicate interfaces of a U-plane (user plane) and the dashed lines indicate interfaces of a C-plane (control plane). A U-plane path is established through the interfaces of the U-plane and a C-plane path is established through the interfaces of the C-plane.

In the above configuration, there is an X3 interface (C-plane) between each of the eNBs (the first base station eNB1 and the second base station eNB2) and the third base station PhNB, and there is a Ph-Uu interface (U-plane) between the third base station PhNB and the user device UE. There is no C-plane interface between the third base station PhNB and the user device UE.

In the radio communication system CS, signals (data signals and control signals) are exchanged using a bearer, which is a logical communication path.

A U-plane bearer (EPS bearer) is established between the user device UE and the gateway device GW under control of the switching center MME (established on the basis of a control signal transmitted by the switching center MME). Specifically, an EPS bearer includes a data radio bearer DRB and an S 1 bearer S1B. A data radio bearer DRB is a bearer established between the user device UE and each of the base stations (the first base station eNB1, the second base station eNB2, and the third base station PhNB). An S1 bearer S1B is a bearer established between each of the base stations and the gateway device GW. The path of an established EPS bearer can be switched under the control of the switching center MME.

With regard to the C-plane, a signaling radio bearer SRB is established between the user device UE and each of the eNBs (the first base station eNB1 and the second base station eNB2), and an S1 signaling bearer is established between each of the eNBs and the switching center MME. An X2 signaling bearer is established between the eNBs, and an X3 signaling bearer is established between each of the eNBs and the third base station PhNB.

Nodes in the radio communication system CS have their respective unique identifiers. An identifier of a node may be an IP address, a TEID (tunnel endpoint identifier), a network address, etc., of the node. Multiple identifiers may be allocated to a single node. The IP address is an address value that uniquely identifies the node in the radio communication system CS. The TEID is an identifier that identifies an endpoint of a bearer (GTP tunnel) that logically connects nodes. The network address is an address value that, when the radio communication system CS is divided into subnets, identifies to which subnet the node belongs. In the present embodiment, the base stations (the first base station eNB1, the second base station eNB2, and the third base station PhNB) may each use, as their identifier, a CGI (cell global identity) that can uniquely identify their respective cells C in the radio communication system CS. The nodes in the radio communication system CS can identify other nodes using identifiers of the other nodes so as to exchange signals with the identified nodes.

### 1 (3). Splitting of C-plane and U-plane (C/U-plane Split)

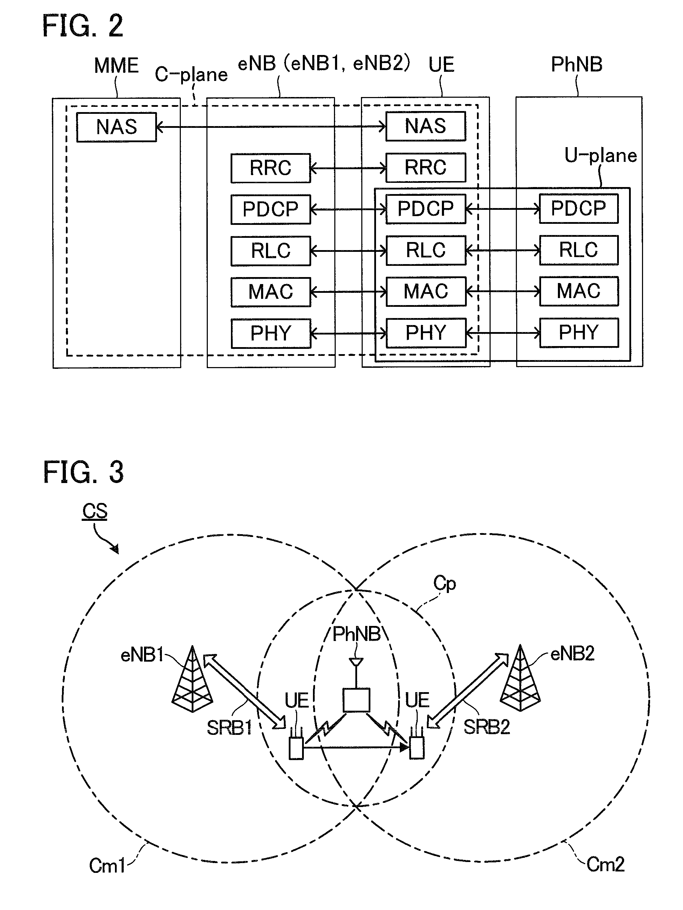

FIG. 2 is a diagram describing a protocol structure (protocol stack) used in the radio communication system CS of the present embodiment. The protocol stack in FIG. 2 includes, sequentially from the lowest layer, a physical layer (PHY), a medium access control layer (MAC), a radio link control layer (RLC), a packet data convergence protocol layer (PDCP), a radio resource control layer (RRC), and a non-access stratum (NAS). Configurations of the above-mentioned layers are similar to those specified in LTE/SAE.

In the radio communication system CS of the present embodiment, it is possible to set a C-plane path and a U-plane path to the user device UE via different base stations. That is, the C-plane and the U-plane can be separated (C/U-plane split is possible). FIG. 2 illustrates a state in which a C-plane path is established between the user device UE and the switching center MME via the first base station eNB and a U-plane path is established between the user device UE and the gateway device GW via the second base station PhNB.

As illustrated in FIG. 2, four layers from the physical layer (PHY) to the packet data convergence protocol layer (PDCP) are common to the C-plane and the U-plane. On the U-plane, user data are exchanged between nodes that are interconnected at each of the layers from the physical layer (PHY) to the packet data convergence protocol layer (PDCP).

In addition to the four layers, the C-plane has the radio resource control layer (RRC) and the non-access stratum (NAS) above the four layers. The eNBs (the first base station eNB 1 and the second base station eNB2) transmit control messages of the radio resource control layer (e.g., RRC Connection Reconfiguration described later) to the user device UE so as to control radio resources that the user device UE uses (e.g., a signaling radio bearer SRB). The switching center MME transmits control messages of the non-access stratum to the user device UE so as to control logical resources that the user device UE uses. The control messages of the non-access stratum are included in eNB-generated control messages of the radio resource control layer so as to be transferred to the user device UE.

### 1(4). Handover under C/U-plane Split (C/U-plane Split Handover) 1(4)-1. Overview of C/U-plane Split Handover Operation

With reference to FIG. 3, an overview of C/U-plane split handover operation of the present embodiment is given. A base station forms a cell C around itself, the cell C being a range within which the base station can perform radio communication. Specifically, the first base station eNB 1 forms a macro cell Cm1, the second base station eNB2 forms a macro cell Cm2, and the third base station PhNB forms a phantom cell Cp. The user device UE located in a cell C can communicate by radio with the base station that forms the cell C.

FIG. 3 illustrates a situation in which, as the user device UE moves, the user device UE is handed over from the first base station eNB 1 to the second base station eNB2. At first, the user device UE is in the macro cell Cm1 formed by the first base station eNB 1 and performs C-plane communication with the first base station eNB 1 using a first signaling radio bearer SRB1. As the user device UE moves in the direction of the right arrow in the figure, the user device UE is handed over from the first base station eNB 1 to the second base station eNB2 and starts C-plane communication with the second base station eNB2 using a newly established second signaling radio bearer SRB2.

While the C-plane handover described above is performed, the user device UE remains in the phantom cell Cp and continues U-plane communication with the third base station PhNB. That is, in the present embodiment, while the C-plane handover is performed, U-plane connection is maintained.

### 1(4)-2. Example of C/U-plane Split Handover Operation

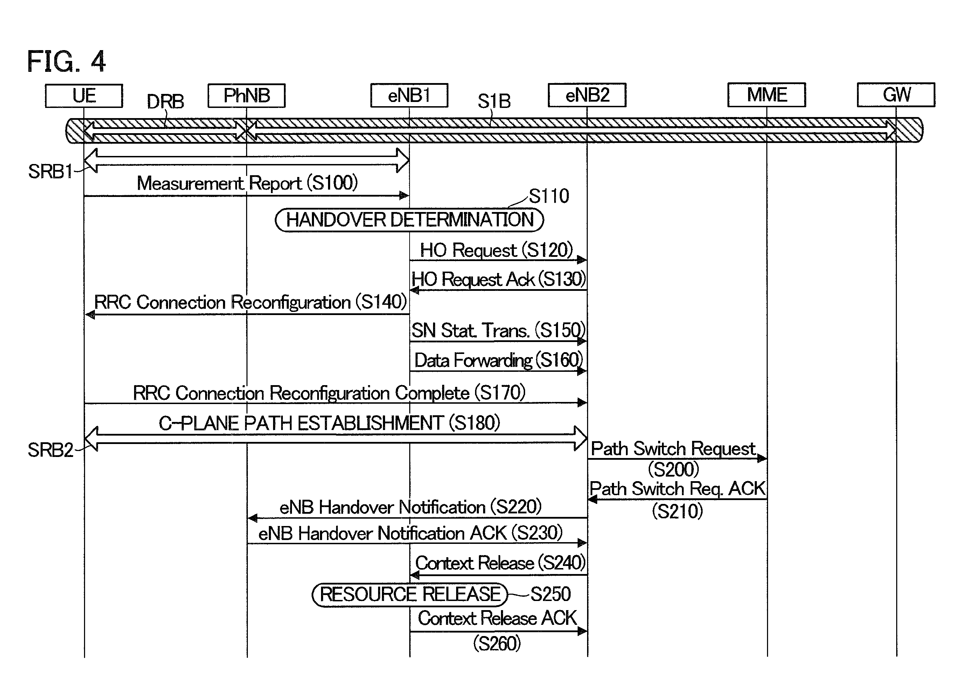

FIG. 4 is a flow diagram illustrating an example of the C/U-plane split handover operation. The second base station eNB2, which is the target base station in the handover, notifies the third base station PhNB of its own identifier, i.e., the identifier of the second base station eNB2, which is the base station that has a C-plane path to the user device UE.

In the example in FIG. 4, it is assumed that, at the outset, a C-plane path (a first signaling radio bearer SRB1) is established between the first base station eNB1 and the user device UE and a U-plane path is established via the third base station PhNB between the user device UE and the gateway device GW.

The user device UE measures and reports received power (received quality) of radio waves transmitted by neighboring base stations to the first base station eNB1, to which the user device UE is currently connected by radio. More specifically, the user device UE transmits a Measurement Report message (measurement report message) that carries information indicating received power (received quality) of radio waves (radio signals) received from neighboring base stations to the first base station eNB1 through the signaling radio bearer SRB1 (S100).

Having received the Measurement Report message from the user device UE, the first base station eNB 1 makes a determination of whether it should cause the user device UE to be handed over (S110). An example of the above determination is a determination of "whether the received power of radio waves from another base station is greater than that of the radio waves received from the first base station eNB1, to which the user device UE is currently connected (in whose service area the user device is now present)". In this example, at step S110, the first base station eNB1 is assumed to have determined that the received power from the another base station (the second base station eNB2) is greater than that from the first base station eNB1 and to have determined that it should cause the user device UE to be handed over to the second base station eNB2.

After making the determination at step S110, the first base station eNB1 transmits, to the second base station eNB2 through an X2 signaling bearer, a Handover Request message (handover request message) requesting that the user device UE be handed over to the second base station eNB2 with respect to the C-plane (S120). The Handover Request message includes an identifier of the user device UE, to which the first base station eNB1 is currently connected by radio, and an identifier of the third base station PhNB, via which the U-plane path established with respect to the user device UE passes.

After receiving the Handover Request message, if the second base station eNB2 can accommodate the user device UE, the second base station eNB2 stores the identifier of the third base station PhNB that is included in the Handover Request message, and transmits a Handover Request ACK message (handover response message) to the first base station eNB1 (S130). The Handover Request ACK message is a message that indicates that handover based on the Handover Request message can be performed and includes a parameter necessary for the user device UE to connect to the second base station eNB2. If the second base station eNB2 cannot accommodate the user device UE, the second base station eNB2 transmits a Handover Preparation Failure message to the first base station eNB1, and the procedure is repeated from the step at which a Measurement Report message is received (S100).

Having received the Handover Request ACK message, the first base station eNB1 transmits, to the user device UE, which is currently connected to its own station, an RRC Connection Reconfiguration message (radio connection reconfiguration message) instructing that a second signaling radio bearer SRB2 be established between the second base station eNB2 and the user device UE (S140). The RRC Connection Reconfiguration message includes a parameter (e.g., an identifier of the second base station eNB2) necessary for the user device UE to connect to the second base station eNB2 by radio.

The first base station eNB1 transmits an SN Status Transfer message to the second base station eNB2 (S150) and performs data transfer (Data Forwarding) (S160). The SN Status Transfer message includes information such as a PDCP sequence number status (a PDCP SN Status). The two steps described immediately above may be omitted.

The user device UE, in accordance with the received RRC Connection Reconfiguration message, reconfigures settings of its own device so as to establish the second signaling radio bearer SRB2 to the second base station eNB2. Having reconfigured the settings, the user device UE transmits an RRC Connection Reconfiguration Complete message (radio connection reconfiguration completion message) to the second base station eNB2 (S170).

After the second base station eNB2 receives the RRC Connection Reconfiguration Complete message, a C-plane path (the second signaling radio bearer SRB2) is established (S180). The second base station eNB2 then transmits a Path Switch Request message (path switch message) to the switching center MME (S200). The Path Switch Request message is a control message indicating that the second signaling radio bearer SRB2 has been established between the user device UE and the second base station eNB2. The Path Switch Request message includes the identifier of the user device UE and the identifier of the second base station eNB2 (i.e., the identifier of its own station).

Having received the Path Switch Request message, the switching center MME stores the identifier of the user device UE in association with the identifier of the second base station eNB2, the identifiers being included in the Path Switch Request message. That is, the switching center MME stores the identifier of the user device UE in association with the identifier of the eNB to which the user device UE is currently connected by radio. Consequently, when transmitting a control message to the user device UE, the switching center MME can recognize the eNB via which it should transmit the control message. The switching center MME then transmits a Path Switch Request ACK message (path switch acknowledgment message) to the second base station eNB2 (S210).

Having received the Path Switch Request ACK message, the second base station eNB2 transmits an eNB Handover Notification message (base station switch notification message) through the X3 signaling bearer to the third base station PhNB indicated by the identifier included in the Handover Request message, the identifier having been received and stored at step S120 (S220). The eNB Handover Notification message is a control message indicating that the radio connection destination for the user device UE (the base station to which the signaling radio bearer SRB is established) has been switched from the first base station eNB1 to the second base station eNB2. The eNB Handover Notification message includes the identifier to identify the user device UE and the identifier to identify the second base station eNB2, which is its own station.

Having received the eNB Handover Notification message, the third base station PhNB stores the identifier of the user device UE in association with the identifier of the second base station eNB2, the identifiers being included in the eNB Handover Notification message. That is, the third base station PhNB stores the identifier of the user device UE in association with the identifier of the eNB to which the user device UE is currently connected by radio. Consequently, when transmitting a control message to the user device UE, the third base station PhNB can recognize the eNB via which it should transmit the control message. The third base station PhNB then transmits an eNB Handover Notification ACK message (base station switch acknowledgment message) to the second base station eNB2 (S230).

Having received the eNB Handover Notification ACK message, the second base station eNB2 transmits a Context Release message (context release message) to the first base station eNB1 (S240). The Context Release message is a message that indicates success of the handover and is a control message that informs the first base station eNB1 that the first base station eNB1 may release a communication resource (a C-plane path, etc.) secured by the first base station eNB1. Having received the Context Release message, the first base station eNB1 releases the communication resource that the first base station eNB1 has secured for the user device UE to communicate (S250) and transmits a Context Release ACK message (context release acknowledgment message) to the second base station eNB2 (S260). The Context Release ACK message indicates completion of release of the communication resource.

Alternatively, the communication resource of the first base station eNB 1 may be maintained after step S230.

By use of the C/U-plane split handover operation described above, while the C-plane radio connection destination for the user device UE is switched from the first base station eNB1 to the second base station eNB2, the U-plane path established via the third base station PhNB is maintained.

### 1(4)-3. Modification of C/U-plane Split Handover Operation

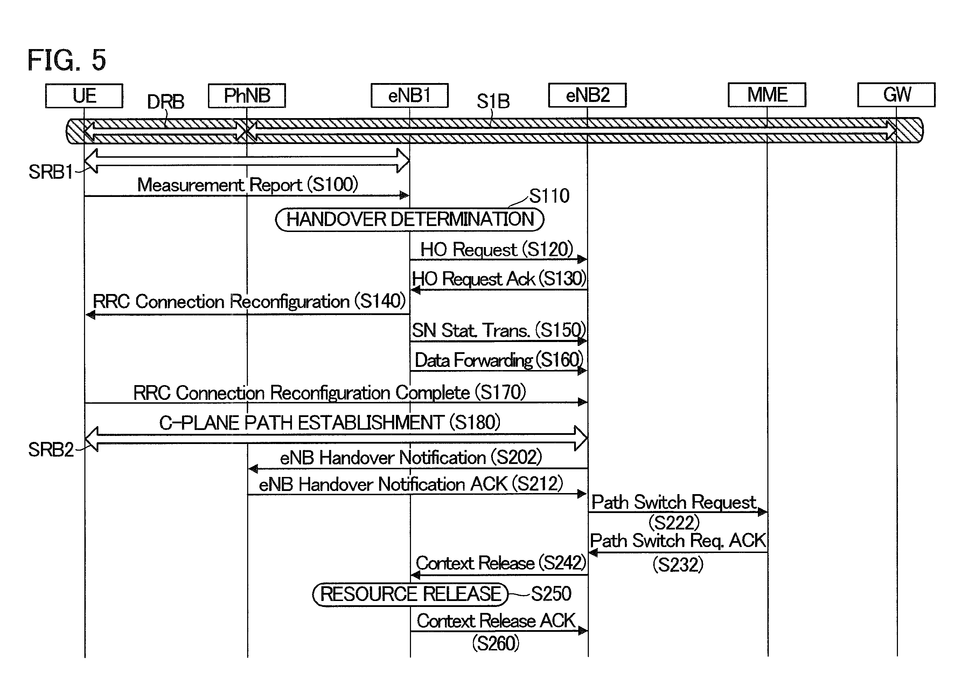

In the above configuration, in which the user device UE is handed over from the first base station eNB1 to the second base station eNB2 with respect to the C-plane, a configuration may be adopted in which the second base station eNB2 transmits the eNB Handover Notification message to the third base station PhNB before transmitting the Path Switch Request message, as shown in FIG. 5.

In the example illustrated in FIG. 5, having received the RRC Connection Reconfiguration Complete message (that is, after the second signaling radio bearer SRB2 has been established), the second base station eNB2 transmits an eNB Handover Notification message that is similar to the one transmitted at step S220 to the third base station PhNB (S202). Having received the eNB Handover Notification message, the third base station PhNB stores the identifier of the user device UE in association with the identifier of the second base station eNB2, the identifiers being included in the eNB Handover Notification message, and transmits an eNB Handover Notification ACK message to the second base station eNB2 (S212).

Having received the eNB Handover Notification ACK message, the second base station eNB2 transmits a Path Switch Request message that is similar to the one transmitted at step S200 to the switching center MME (S222). Having received the Path Switch Request message, the switching center MME stores the identifier of the user device UE in association with the identifier of the second base station eNB2, the identifiers being included in the Path Switch Request message, and transmits a Path Switch Request ACK message to the second base station eNB2 (S232). Having received the eNB Handover Notification ACK message, the second base station eNB2 transmits a Context Release message to the first base station eNB1 (S242). The rest of the operation is as described in the above example (section 1 (4)-2).

As will be understood from the above description, as long as the second base station eNB2 transmits the eNB Handover Notification message to the third base station PhNB after the RRC Connection Reconfiguration Complete message has been received from the user device UE, the second base station eNB2 may transmit the eNB Handover Notification message before or after the exchange of the Path Switch Request message and the Path Switch Request ACK message.

### 1 (5). Configuration of Each Element

### 1(5)-1. Configuration of User Device

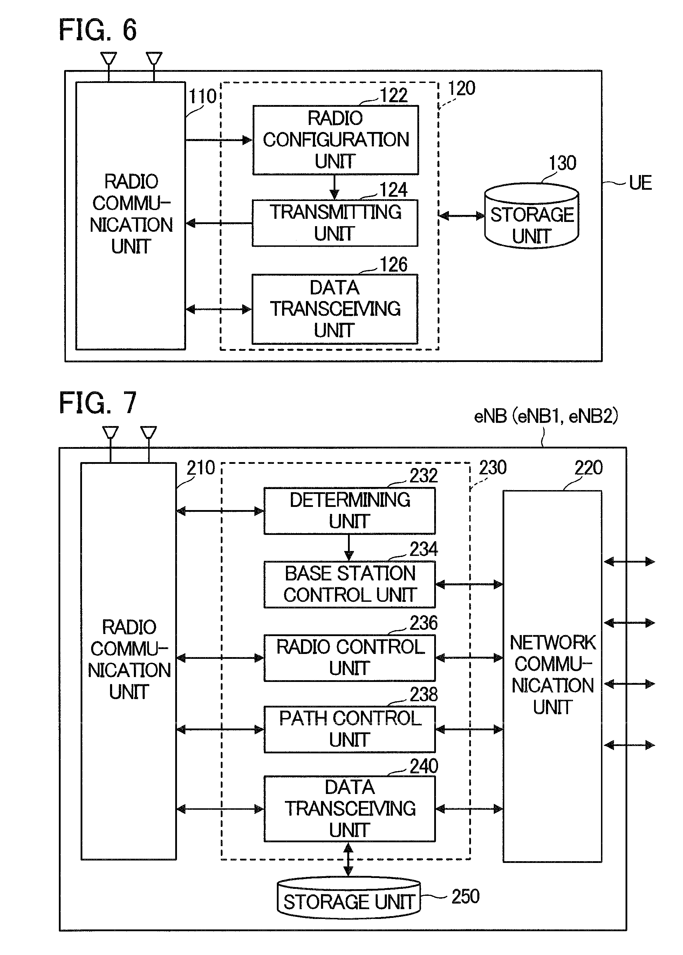

FIG. 6 is a block diagram illustrating a configuration of the user device UE according to the present embodiment. The user device UE includes a radio communication unit 110, a control unit 120, and a storage unit 130. In the figure, the illustration of an output device outputting audio, images, etc., and an input device for accepting instructions from a user, etc., are omitted for brevity.

The radio communication unit 110 is an element for performing radio communication with each of the base stations (the first base station eNB1, the second base station eNB2, and the third base station PhNB). The radio communication unit 110 includes transceiving antennas, a receiving circuit for receiving radio signals (radio waves) and converting them to electrical signals, and a transmitting circuit for converting electrical signals, such as control signals and data signals, to radio signals and transmitting them. The storage unit 130 stores information related to communication control, in particular, an identifier of each node, including that of its own device, and context information of communication paths (C-plane paths and U-plane paths).

The control unit 120 includes a radio configuration unit 122, a transmitting unit 124, and a data transceiving unit 126. The radio configuration unit 122 is an element for configuring the radio communication unit 110 in accordance with a received control message and receives control messages from each of the eNBs (the first base station eNB1 and the second base station eNB2) through the radio communication unit 110. For example, the radio configuration unit 122, in accordance with a received RRC Connection Reconfiguration message, configures the radio communication unit 110 so as to establish a signaling radio bearer SRB (a C-plane path). The transmitting unit 124 is an element for transmitting control messages (e.g., a Measurement Report message, an RRC Connection Reconfiguration Complete message) through the radio communication unit 110. As described above, the radio configuration unit 122 and the transmitting unit 124 perform C-plane communication. The data transceiving unit 126 exchanges data signals with each of the base stations (the first base station eNB1, the second base station eNB2, and the third base station PhNB, etc.) through the radio communication unit 110. That is, the data transceiving unit 126 performs U-plane communication.

The control unit 120 and the elements included in the control unit 120 are functional blocks accomplished by the fact that a CPU (central processing unit; not shown in the figure) provided in the user device UE executes a computer program stored in the storage unit 130 and operates in accordance with the computer program.

### 1(5)-2. Configuration of First Base Station and Second Base Station

FIG. 7 is a block diagram illustrating a configuration of a base station eNB (the first base station eNB 1, the second base station eNB2) according to the present embodiment. The base station eNB includes a radio communication unit 210, a network communication unit 220, a control unit 230, and a storage unit 250. The radio communication unit 210 is an element for performing radio communication with the user device UE and has a configuration similar to that of the radio communication unit 110 of the user device UE. The network communication unit 220 is an element for performing communication with other nodes (another base station eNB, the third base station PhNB, the switching center MME, the gateway device GW, etc.) in the network NW. The network communication unit 220 exchanges electrical signals with the other nodes by wire or by radio. The storage unit 250 stores information related to communication control, in particular, an identifier of each node, including that of its own station, and context information of communication paths (C-plane paths and U-plane paths). For example, the storage unit 250 stores the identifier of the third base station PhNB.

The control unit 230 includes a determining unit 232, a base station control unit 234, a radio control unit 236, a path control unit 238, and a data transceiving unit 240. The determining unit 232 is an element for making a determination, in accordance with e.g., a Measurement Report message received from the user device UE, as to whether the base station eNB should cause the user device UE to be handed over. The determining unit 232 gives a signal that indicates the result of the determination to the base station control unit 234. The base station control unit 234 is an element for exchanging control messages (e.g., a Handover Request message, an eNB Handover Notification message) with other base stations (eNB and PhNB) and communicates with the other base stations (eNB and PhNB) through the network communication unit 220. The radio control unit 236 is an element for controlling communication with the user device UE and exchanges control messages (an RRC Connection Reconfiguration message, etc.) with the user device UE through the radio communication unit 110. The path control unit 238 is an element for exchanging control messages (a Path Switch Request message, etc.) related to communication paths (C-plane paths and U-plane paths) and communicates with the switching center MME through the network communication unit 220. As described above, the determining unit 232, the base station control unit 234, and the path control unit 238 perform C-plane communication. The data transceiving unit 240 exchanges (relays) user signals with the user device UE through the radio communication unit 210 and also exchanges (relays) user signals with the gateway device GW through the network communication unit 220. That is, the data transceiving unit 240 performs U-plane communication.

The control unit 230 and the elements included in the control unit 230 are functional blocks accomplished by the fact that a CPU (not shown in the figure) provided in the base station eNB executes a computer program stored in the storage unit 250 and operates in accordance with the computer program.

### 1(5)-3. Configuration of Third Base Station

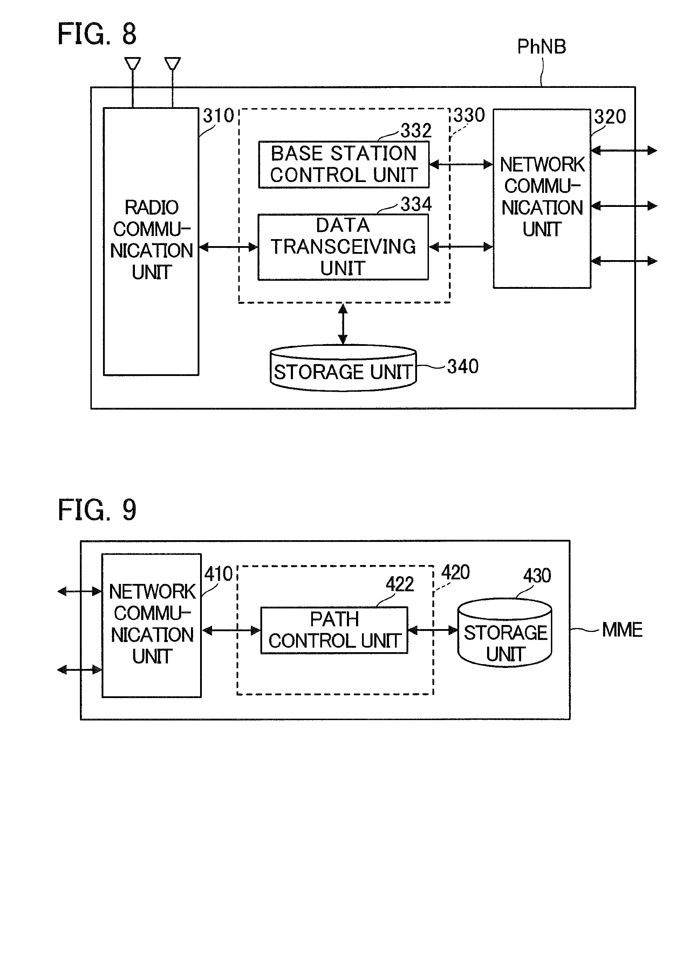

FIG. 8 is a block diagram illustrating a configuration of the third base station PhNB according to the present embodiment. The third base station PhNB includes a radio communication unit 310, a network communication unit 320, a control unit 330, and a storage unit 340. The radio communication unit 310 is an element for performing radio communication with the user device UE and has a configuration similar to that of the radio communication units 210 of the eNBs (the first base station eNB1 and the second base station eNB2). It is of note that the third base station PhNB does not have a C-plane interface (C-plane path) to the user device UE. The network communication unit 320 is an element for performing communication with other nodes (eNB, the gateway device GW, etc.) in the network NW and exchanges electrical signals with the other nodes. The storage unit 340 stores information related to communication control, in particular, an identifier of each node, including that of its own station, and context information of communication paths.

The control unit 330 includes a base station control unit 332 and a data transceiving unit 334. The base station control unit 332 is an element for exchanging control messages (e.g., an eNB Handover Notification ACK message) with other base stations (eNB and PhNB) and communicates with the other base stations (eNB and PhNB) through the network communication unit 320. That is, the base station control unit 332 performs C-plane communication in the network NW. The data transceiving unit 334 exchanges (relays) user signals with the user device UE through the radio communication unit 310 and also exchanges (relays) user signals with the gateway device GW through the network communication unit 320. That is, the data transceiving unit 334 performs U-plane communication.

The control unit 330 and the elements included in the control unit 330 are functional blocks accomplished by the fact that a CPU (not shown in the figure) provided in the third base station PhNB executes a computer program stored in the storage unit 340 and operates in accordance with the computer program.

### 1 (5)-4. Configuration of Switching Center

FIG. 9 is a block diagram illustrating a configuration of the switching center MME according to the present embodiment. The switching center MME includes a network communication unit 410, a control unit 420, and a storage unit 430. The network communication unit 410 is an element for performing communication with other nodes (the first base station eNB1, the second base station eNB2, the gateway device GW, etc.) in the network NW. The network communication unit 410 has a configuration similar to that of the network communication unit 220 of the base station eNB. The storage unit 430 stores information related to communication control, in particular, an identifier of each node, including that of its own center, and context information of communication paths (C-plane paths and U-plane paths).

The control unit 420 includes a path control unit 422. The path control unit 422 is an element for exchanging control messages (a Path Switch Request message, a Path Switch Request ACK message, etc.) related to communication paths (C-plane paths and U-plane paths) and communicates with other nodes (the first base station eNB1, the second base station eNB2, the gateway device GW, etc.) through the network communication unit 410. That is, the path control unit 422 performs C-plane communication through the network communication unit 410. The control unit 420 (path control unit 422) performs C-plane communication but does not perform U-plane communication.

The control unit 420 and the elements included in the control unit 420 are functional blocks accomplished by the fact that a CPU (not shown in the figure) provided in the switching center MME executes a computer program stored in the storage unit 430 and operates in accordance with the computer program.

### 1 (5)-5. Configuration of Gateway Device

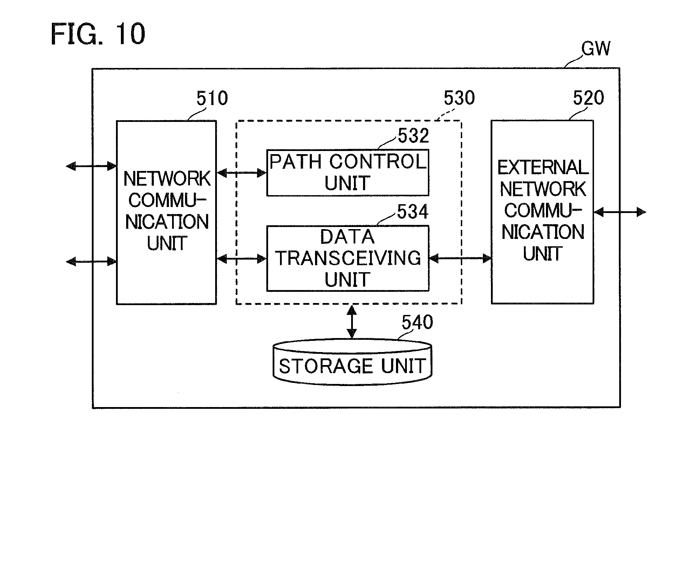

FIG. 10 is a block diagram illustrating a configuration of the gateway device GW according to the present embodiment. The gateway device GW includes a network communication unit 510, an external network communication unit 520, a control unit 530, and a storage unit 540. The network communication unit 510 is an element for performing communication with other nodes (the first base station eNB1, the second base station eNB2, the third base station PhNB, the switching center MME, etc.) in the network NW. The network communication unit 510 has a configuration similar to that of the network communication unit 220 of the base station eNB. The external network communication unit 520 is an element for performing communication with the internet IN and performs protocol conversion of user signals as necessary. The storage unit 540 stores information related to communication control, in particular, an identifier of each node, including that of its own device, and context information of communication paths (C-plane paths and U-plane paths).

The control unit 530 includes a path control unit 532 and a data transceiving unit 534. The path control unit 532 is an element for exchanging control messages (a Path Switch Request message, Path Switch Request ACK message, etc.) related to communication paths (C-plane paths and U-plane paths) and communicates with other nodes (the switching center MME, etc.) through the network communication unit 510. That is, the path control unit 532 performs C-plane communication through the network communication unit 510. The data transceiving unit 534 transmits (relays) user signals that originate from the user device UE and are received through the network communication unit 510 to the internet IN (an external server in the internet IN) though the external network communication unit 520, and also transmits (relays) user signals received through the external network communication unit 520 from the internet IN (the external server in the internet IN) to the user device UE through the network communication unit 510.

The control unit 530 and the elements included in the control unit 530 are functional blocks accomplished by the fact that a CPU (not shown in the figure) provided in the gateway device GW executes a computer program stored in the storage unit 540 and operates in accordance with the computer program.

### 1(6). Effects Achieved by the Configurations of Present Embodiment

In the above-described configurations according to the first embodiment, the third base station PhNB can recognize, on the basis of the eNB Handover Notification message transmitted from the second base station eNB2, that the C-plane radio connection destination for the user device UE has been switched to the second base station eNB2 after the C/U-plane split handover. Consequently, even after the C/U-plane split handover has been performed, the third base station PhNB can transmit a control message to the user device UE indirectly. As a result, the radio communication system CS can be controlled appropriately even after the C/U-plane split handover operation.

Other than the configurations of the present embodiment, a configuration can be envisaged in which whenever the third base station PhNB attempts to transmit a control message to the user device UE, the third base station PhNB sends an inquiry to the switching center MME about the identifier of the eNB to which the user device UE is currently connected by radio with respect to the C-plane. This type of configuration, however, is prone to adverse effects such as an increase in processing loads on the switching center MME and a consequent need to consider a validity of the identifier of an eNB that is received in response to an inquiry that the third base station PhNB has sent. Another configuration may be envisaged in which whenever the third base station PhNB transmits a control message to the user device UE, a handover source eNB transfers the control message to a handover target eNB. This type of configuration, however, is prone to adverse effects such as a delay in the transferred control message reaching the destination (particularly if handover has been performed more than once), and need for a handover source eNB to maintain context information of the user device UE even after completion of handover. Accordingly, the configurations according to the present embodiment are preferred to the configurations described immediately above.

### 2. Second Embodiment

A second embodiment of the present invention will now be described. Regarding those elements for which actions and functions in each of the following embodiments are substantially the same as those in the first embodiment, reference numerals used in the above description are used, and descriptions of such elements are omitted, as appropriate.

### 2(1). Example of C/U-plane Split Handover Operation

In the first embodiment, the C-plane radio connection destination (the second base station eNB2) for the user device UE, which has been switched by the C/U-plane split handover, is notified, after a new C-plane path (the second signaling radio bearer SRB2) has been established, to the third base station PhNB, to which the U-plane path is established. In the second embodiment, the C-plane radio connection destination that has been switched is notified to the third base station PhNB before a new C-Plane path is established (before an RRC Connection Reconfiguration message is sent).

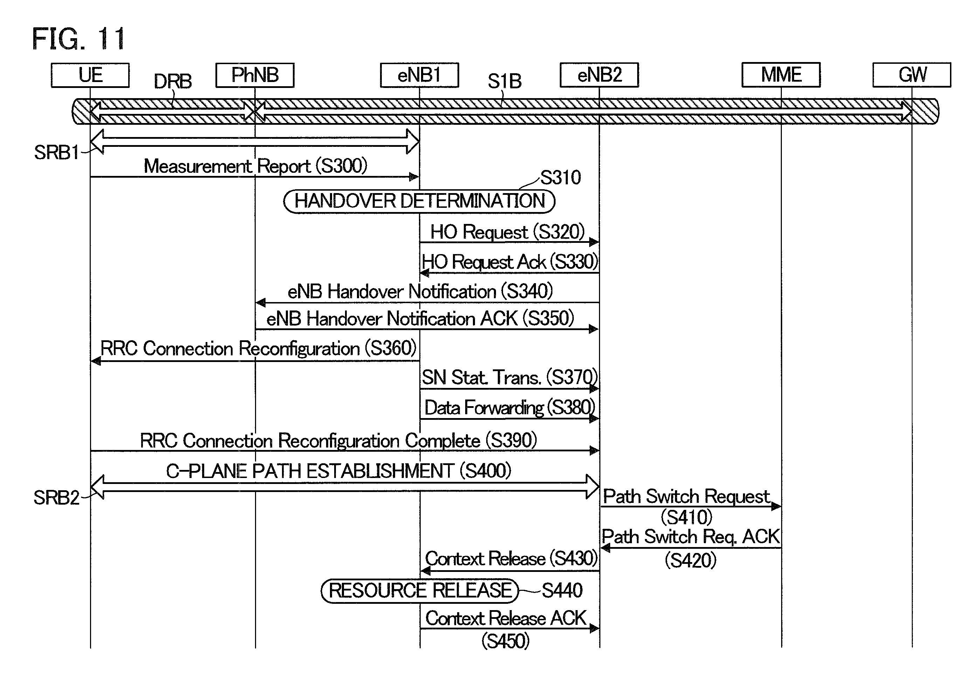

With reference to FIG. 11, an example of C/U-plane split handover operation according to the present embodiment is given. In this example, similarly to the first embodiment (FIG. 4), it is assumed that, at the outset, a C-plane path (a first signaling radio bearer SRB1) is established between the first base station eNB1 and the user device UE and a U-plane path is established via the third base station PhNB between the user device UE and the gateway device GW.

Because procedures from the step at which the user device UE transmits a Measurement Report message (S300) to the step at which the second base station eNB2 transmits a Handover Request ACK message (S330) are similar to those from step S 100 to step S130 described in the first embodiment, descriptions thereof are omitted.

Having received the Handover Request ACK message, the second base station eNB2 transmits an eNB Handover Notification message via the X3 signaling bearer to the third base station PhNB indicated by the identifier included in the Handover Request message, the identifier having been received and stored at step S320 (S340). The eNB Handover Notification message is a control message that indicates that the radio connection destination for the user device UE (the base station to which the signaling radio bearer SRB is established) should be switched from the first base station eNB1 1 to the second base station eNB2. The eNB Handover Notification message includes an identifier to identify the user device UE and an identifier to identify the second base station eNB2, which is its own station.

Having received the eNB Handover Notification message, similarly to step S230 in the first embodiment, the third base station PhNB stores the identifier of the user device UE in association with the identifier of the second base station eNB2, the identifiers being included in the eNB Handover Notification message, and transmits an eNB Handover Notification ACK message to the second base station eNB2 (S350).

Because operations after the step at which the first base station eNB1 transmits an RRC Connection Reconfiguration message (S360) are similar to those in the first embodiment (S140 to S260), except that operations of transmitting of the eNB Handover Notification message (S220, S202) and the eNB Handover Notification ACK message (S230, S212) are omitted in this example, descriptions thereof are omitted.

### 2(2). Modification of C/U-plane Split Handover Operation

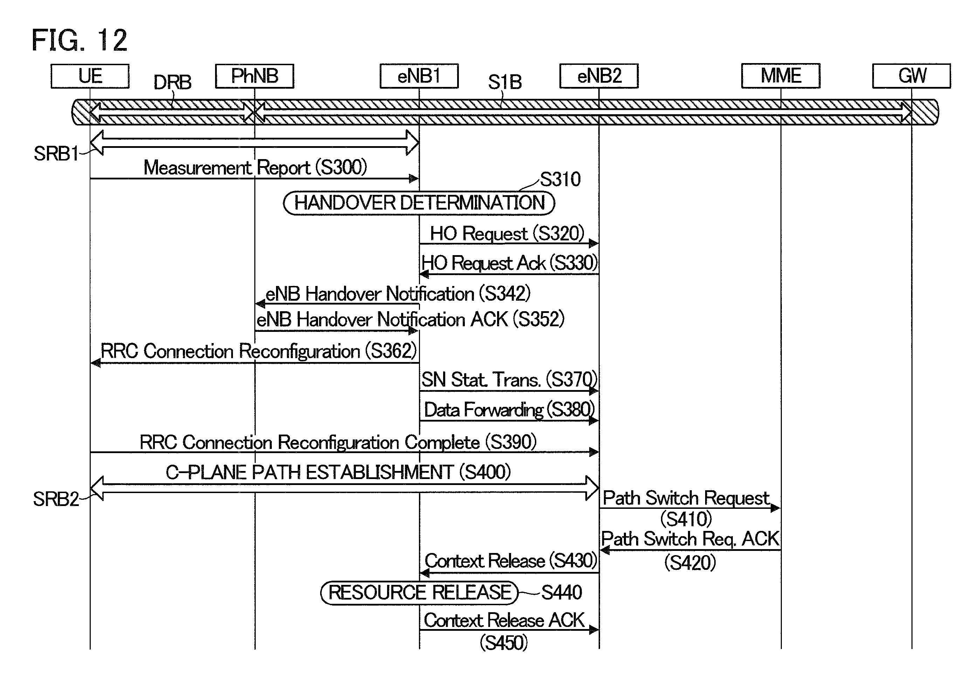

In the above configuration, in which the user device UE is handed over from the first base station eNB1 to the second base station eNB2 with respect to the C-plane, a configuration may be adopted in which the first base station eNB 1 transmits the eNB Handover Notification message to the third base station PhNB, as shown in FIG. 12.

In the example in FIG. 12, having received the Handover Request ACK message from the second base station eNB2, the first base station eNB 1 transmits an eNB Handover Notification message, via the X3 signaling bearer, to the third base station PhNB via which the U-plane path established with respect to the user device UE, which is connected to its own station by radio, passes (that is, the third base station PhNB indicated by the identifier included in the Handover Request message, which is transmitted by the first base station eNB1 at step S320) (S342). The eNB Handover Notification message is a control message that indicates that the radio connection destination for the user device UE (the base station to which the signaling radio bearer SRB is established) should be switched from the first base station eNB1 1 to the second base station eNB2. The eNB Handover Notification message includes the identifier to identify the user device UE and the identifier to identify the second base station eNB2, which is the target base station in the C-plane handover.

Having received the eNB Handover Notification message, the third base station PhNB stores the identifier of the user device UE in association with the identifier of the second base station eNB2, the identifiers being included in the eNB Handover Notification message, and transmits the eNB Handover Notification ACK message to the first base station eNB1 (S352). Having received the eNB Handover Notification ACK message, the first base station eNB1 transmits an RRC Connection Reconfiguration message to the user device UE (S362). Because operations after step S362 are similar to those in the example in FIG. 11 described above, descriptions thereof are omitted.

### 2(3). Effects Achieved by the Configuration of Present Embodiment

Effects similar to those in the configurations of the first embodiment are achieved in the configurations of the second embodiment described above. Compared with the configurations of the first embodiment in which the eNB Handover Notification message is notified after a new C-plane path has been established, the handover target base station after the C-plane handover can be notified to the third base station PhNB earlier in the configurations of the second embodiment.

It is of note, however, taking into account a received quality of control signals received at the user device UE, that there may be circumstances in which it is preferable to perform the C-plane handover earlier. In such a case, the configurations of the first embodiment are preferred in which the eNB Handover Notification message is transmitted after a new C-plane path has been established.

### 3. Modifications

The above-illustrated embodiments can be modified in various ways. Specific modifications are illustrated below. Two or more of the freely selected ones of the above embodiments and the following illustrations can be combined, as appropriate, so long as the modifications are not adopted in such a way that they conflict.

### 3(1). Modification 1

In the embodiments above, the C-plane handover is performed. The configurations according to the embodiments above can be adopted in a situation in which a U-plane path is established via the third base station PhNB and another U-plane path is established via the first base station eNB1. In this modification, in response to the user device UE changing its location, while the C-plane handover according to the above embodiments is performed, handover of the U-plane path passing via the first base station eNB 1 is also performed. That is, with respect to the U-plane, as in the conventional technologies, after receiving the Path Switch Request message (S200, S222, S410), the switching center MME (path control unit 422) transmits, to the gateway device GW, a Path Switch Request message that requests that the U-plane path passing via the first base station eNB1 be switched so that the U-plane path passes the second base station eNB2. The gateway device GW switches the U-plane path in accordance with the Path Switch Request message from the switching center MME and transmits a Path Switch Request ACK message to the switching center MME. Having received the Path Switch Request ACK message from the gateway device GW, the switching center MME transmits the Path Switch Request ACK message to the second base station eNB2 (S210, S232, S420).

### 3(2). Modification 2

In the first embodiment, even after the signaling radio bearer SRB has been switched (even after the second signaling radio bearer SRB2 has been established), the third base station PhNB cannot recognize the eNB (the second base station eNB2) to which the user device UE is currently connected by radio until the third base station PhNB receives the eNB Handover Notification message. Consequently, there is a possibility that the third base station may transmit a control message that is directed at the user device UE to the C-plane handover source eNB (the first base station eNB1).

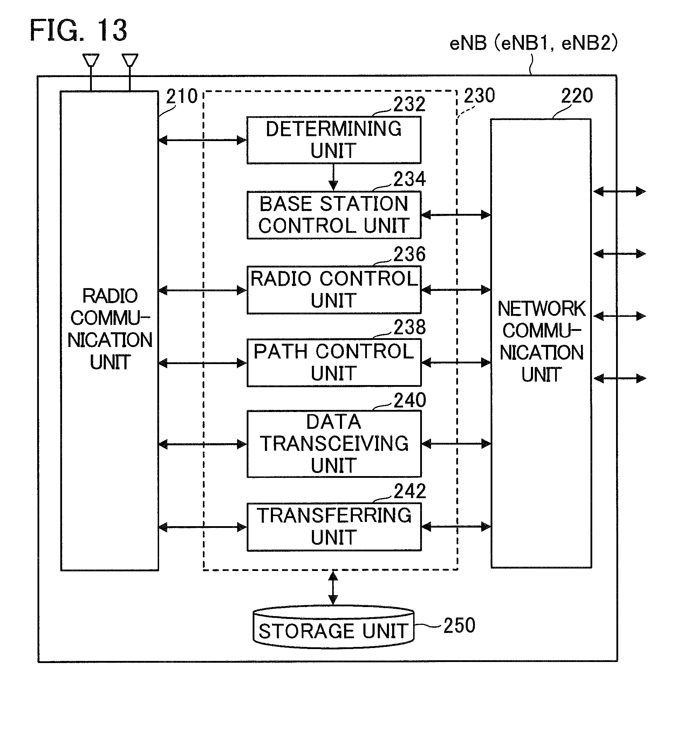

Accordingly, in the first embodiment, the first base station eNB1 preferably transfers control messages from the third base station PhNB to the second base station eNB2 during a period after the first base station eNB1 transmits the RRC Connection Reconfiguration message (S140) and before the third base station PhNB receives the eNB Handover Notification message (S220 or S202). FIG. 13 illustrates an example of a configuration of the first base station eNB1 that includes a transferring unit 242 that performs such transferring.

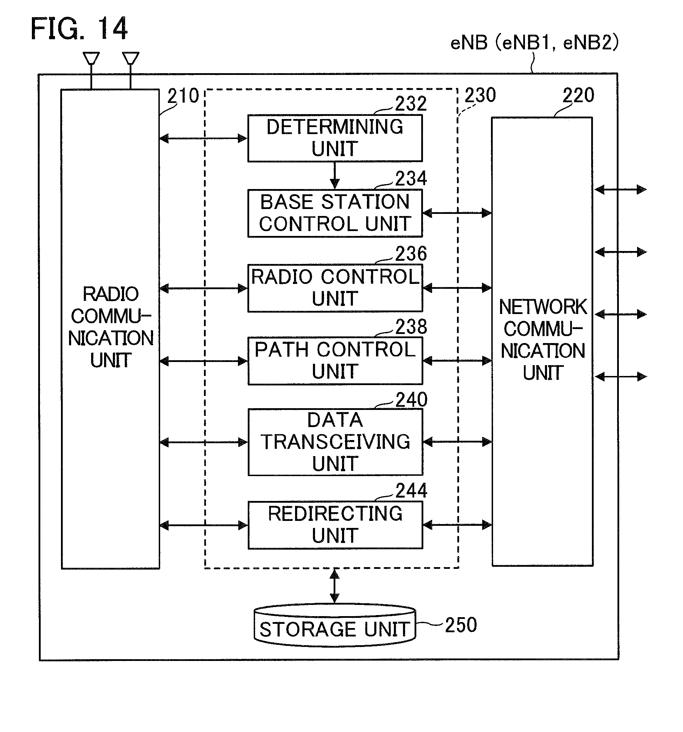

Other than the configuration in which control messages from the third base station PhNB are transferred, a configuration in which the third base station PhNB redirects its control messages may be adopted. That is, during a period after the first base station eNB1 transmits the RRC Connection Reconfiguration message (S140) and before the third base station PhNB receives the eNB Handover Notification message (S220 or S202), if the first base station eNB1 receives a control message from the third base station PhNB, the first base station eNB1 preferably transmits a redirect message to the third base station PhNB, the redirect message instructing that the control message be transmitted to the second base station eNB2. The redirect message carries an identifier of the second base station eNB2. FIG. 14 illustrates an example of a configuration of the first base station eNB1 that includes a redirecting unit 244 that performs such redirection.

### 3(3). Modification 3

In the above embodiments, a CGI is used as an identifier to identify each of the base stations (the first base station eNB1, the second base station eNB2, and the third base station PhNB). It is of note, however, that, any identifier (e.g., an IP address) that can uniquely identify each of the base stations in the radio communication system CS may be used as an identifier of each base station.

### 3(4). Modification 4

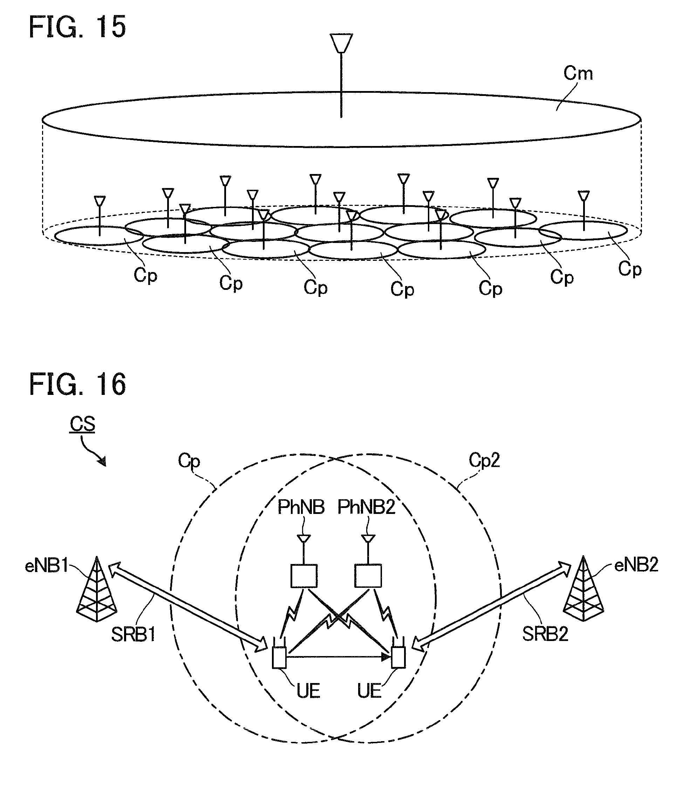

In the above embodiments, a size of a cell C that each base station forms around it is chosen freely. For example, a configuration may be adopted in which radio transmitting capabilities (average transmitting power, maximum transmitting power, etc.) of the eNBs (the first base station eNB1 and the second base station eNB2) are greater than those of the third base station PhNB, and accordingly the size of cells formed by the eNBs (the macro cells Cm1 and Cm2) is larger than that of a cell formed by the third base station PhNB (the phantom cell Cp). In the above configuration, phantom cells Cp are preferably formed in a multi-layered manner (overlaid) as illustrated in FIG. 15 (although for descriptive purposes a plane on which a macro cell Cm is shown differs from a plane on which phantom cells Cp are shown, in reality the macro cell Cm and the phantom cells Cp can be overlaid on the same plane such as land surface). Alternatively, a configuration may be adopted in which the eNBs and the third base station PhNB form cells C with substantially the same size.

### 3(5). Modification 5

In the above embodiments, with respect to the U-plane, the user device UE communicates by radio with a single third base station PhNB. As in this modification, however, the user device UE may communicate by radio with multiple third base stations PhNB with respect to U-plane paths. A mode for radio communication can be chosen freely. For example, the user device UE may communicate by radio using multiple U-plane paths established via respective third base stations PhNB. The user device UE may communicate by radio with multiple third base stations PhNB that coordinate with each other in accordance with the coordinated multi-point transmission/reception (CoMP) specified by the 3GPP protocols.

For example, as illustrated in FIG. 16, the radio communication system CS of the present modification includes the third base station PhNB as described in the above embodiments and a fourth base station PhNB2 that has a configuration substantially the same as that of the third base station PhNB. Similarly to the third base station PhNB, the fourth base station PhNB2 forms a phantom cell Cp2 around it. The third base station PhNB and the fourth base station PhNB2 exchange signals such as control messages through an X4 interface (not shown in the figure). The macro cells Cm (Cm1 and Cm2) are not illustrated in the figure for brevity.

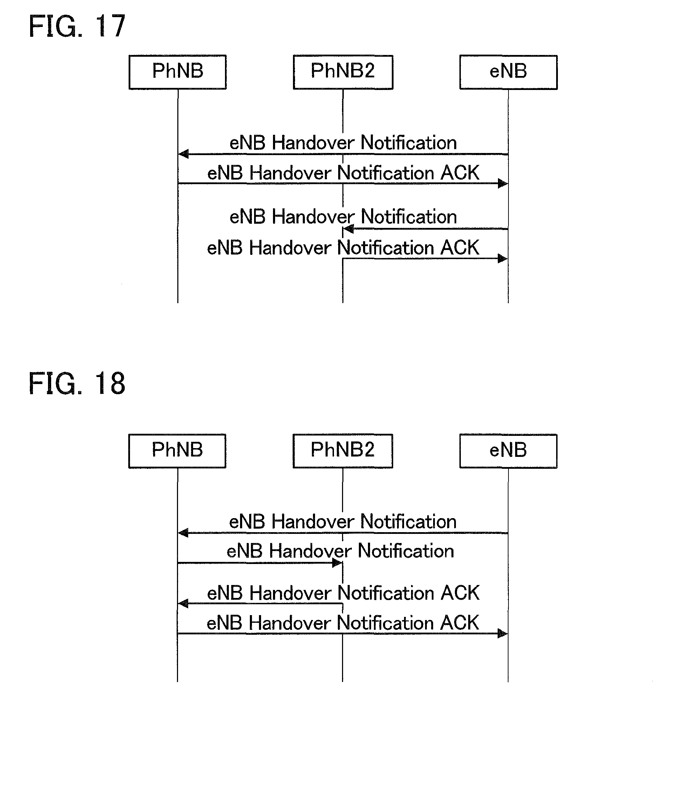

With reference to FIG. 17, an operation flow of the present modification is described. This operation flow can be performed instead of steps S220 and S230 in FIG. 4, steps S202 and S212 in FIG. 5, steps S340 and S350 in FIG. 11, or steps S342 and S344 in FIG. 12.

The present modification is similar to the above embodiments in that an eNB (the first base station eNB 1 or the second base station eNB2) transmits an eNB Handover Notification message to the third base station PhNB and the third base station PhNB, which has received the eNB Handover Notification message, transmits an eNB Handover Notification ACK message to the eNB in reply. Following which, the eNB transmits an eNB Handover Notification message to the fourth base station PhNB2. Having received the eNB Handover Notification message, the fourth base station PhNB2 stores the identifier of the user device UE in association with the identifier of the handover target eNB, the identifiers being included in the eNB Handover Notification message, and transmits an eNB Handover Notification ACK message to the eNB.

The eNB Handover Notification messages may be transmitted in parallel to the third base station PhNB and to the fourth base station PhNB2.

Alternatively, an operation flow illustrated in FIG. 18 may be performed instead of the operation flow illustrated in FIG. 17. The operation flow in FIG. 18 is described below. An eNB (the first base station eNB1 or the second base station eNB2) transmits an eNB Handover Notification message to the third base station PhNB. The third base station PhNB stores the identifier of the user device UE in association with the identifier of the handover target eNB, the identifiers being included in the eNB Handover Notification message, and transfers the eNB Handover Notification message to the fourth base station PhNB2. The fourth base station PhNB2 stores the identifier of the user device UE in association with the identifier of the handover target eNB, the identifiers being included in the eNB Handover Notification message, and transmits an eNB Handover Notification ACK message to the third base station PhNB. The third base station PhNB transmits the received eNB Handover Notification ACK message to the eNB.

### 3(6). Modification 6

In the above embodiments, the third base station PhNB does not exchange control signals with the user device UE. However, a configuration may be adopted in which the third base station PhNB can exchange control signals of a lower layer (e.g., an L1 layer, an L2 layer) with the user device UE. In the configuration above, the third base station PhNB still does not exchange signals related to radio resource control (control signals of the RRC layer). The description immediately above also applies to the fourth base station PhNB2.

### 3(7). Modification 7

The user device UE is a freely chosen device that can perform radio communication with each of the base stations (the first base station eNB1, the second base station eNB2, the third base station PhNB, and the fourth base station PhNB2). The user device UE may be a cell phone terminal, e.g., a feature phone or a smart phone, a desk-top type personal computer, a laptop personal computer, a UMPC (ultra-mobile personal computer), a portable game machine, or another type of radio terminal.

### 3(8). Modification 8

In each of the elements in the radio communication system CS (the first base station eNB1, the second base station eNB2, the third base station PhNB, the fourth base station PhNB2, the switching center MME, and the gateway device GW), functions executed by the CPU instead may be executed by hardware or by a programmable logic device, such as an FPGA (field programmable gate array) and a DSP (digital signal processor).

### 3(9). Modification 9

A configuration may be adopted in which a frequency band of radio waves transmitted by the base stations eNB (the first base station eNB1 and the second base station eNB2) is different from that of radio waves transmitted by the third base station PhNB. For example, a configuration is assumed in which the base stations eNB perform radio communication using a first frequency band (e.g., 2 GHz band) and the third base station PhNB performs radio communication using a second frequency band (e.g., 3.5 GHz band) that is higher than the first frequency band. Because propagation loss becomes greater as a frequency becomes higher, radio communication using the first frequency band tends to be more stable than radio communication using the second frequency band. As described in the above embodiments, it is the base stations eNB that exchange control signals (perform C-plane communication) with the user device UE. Therefore, if the configuration of the present modification is adopted, because control signals are exchanged (C-plane communication is performed) using the first frequency band, which is more stable, the user device UE can be controlled in a more stable manner.

### Description of Reference Signs

UE ... user device,
110 ... radio communication unit,
120 ... control unit,
122 ... radio configuration unit,
124 ... transmitting unit,
126 ... data transceiving unit,
130 ... storage unit,
eNB1 ... first base station,
eNB2 ... second base station,
210 ... radio communication unit,
220 ... network communication unit,
230 ... control unit,
232 ... determining unit,
234 ... base station control unit,
236 ... radio control unit,
238 ... path control unit,
240 ... data transceiving unit,
242 ... transferring unit,
244 ... redirecting unit,
250 ... storage unit,
PhNB ... third base station,
PhNB2 ... fourth base station,
310 ... radio communication unit,
320 ... network communication unit,
330 ... control unit,
332 ... base station control unit,
334 ... data transceiving unit,
340 ... storage unit,
MME ... switching center,
410 ... network communication unit,
420 ... control unit,
422 ... path control unit,
430 ... storage unit,
GW ... gateway device,
500 ... gateway device,
510 ... network communication unit,
520 ... external network communication unit,
530 ... control unit,
532 ... path control unit,
534 ... data transceiving unit,
540 ... storage unit,
C ... cell,
CS ... radio communication system,
Cm (Cm1, Cm2) ... macro cell,
Cp ... phantom cell,
DRB ... data radio bearer,
IN ... internet,
NW... network,
S1B ... S1 bearer, and
SRB (SRB1, SRB2) ... signaling radio bearer.

## Claims

1. A radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein a first control-plane path is established between the first base station and the user device and a user-plane path is established between the user device and the gateway device via the third base station,
wherein the first base station comprises:
a determining unit that determines whether the user device should be handed over from the first base station, to which the user device is currently connected by radio, to the second base station; and
a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station,
wherein the second base station comprises:
a storage unit that stores the identifier of the third base station received from the first base station; and
a base station control unit that transmits, in response to receipt of the handover request message from the first base station, a handover response message to the first base station,
wherein the first base station further comprises:
a radio control unit that transmits, after receipt of the handover response message from the second base station, a radio connection reconfiguration message to the user device, the radio connection reconfiguration message instructing establishment of a second control-plane path between the second base station and the user device,
wherein the user device comprises:
a radio configuration unit that configures the user device, in accordance with the received radio connection reconfiguration message, such that the second control-plane path is established; and
a transmitting unit that transmits, after the radio configuration unit has configured the user device, a radio connection reconfiguration completion message to the second base station,
wherein the base station control unit of the second base station, after receipt of the radio connection reconfiguration completion message from the user device, transmits a base station switch notification message to the third base station indicated by the identifier stored in the storage unit of the second base station, the base station switch notification message indicating that a radio connection destination for the user device has been switched from the first base station to the second base station, and
wherein the third base station comprises:
a base station control unit that transmits, in response to receipt of the base station switch notification message from the second base station, a base station switch acknowledgment message to the second base station.

2. The radio communication system according to claim 1,
wherein the base station switch notification message includes an identifier that identifies the user device, and an identifier that identifies the second base station.

3. The radio communication system according to claim 2,
wherein the second base station further comprises a path control unit that transmits, in response to receipt of the radio connection reconfiguration completion message from the user device, a path switch message to the switching center, the path switch message indicating that the second control-plane path has been established between the user device and the second base station,
wherein the switching center comprises a path control unit that transmits, after receipt of the path switch message, a path switch acknowledgment message to the second base station, and
wherein the base station control unit of the second base station, in response to receipt of the path switch acknowledgment message from the switching center, transmits the base station switch notification message to the third base station indicated by the identifier stored in the storage unit of the second base station.

4. The radio communication system according to claim 2,
wherein the base station control unit of the second base station, in response to receipt of the radio connection reconfiguration completion message from the user device, transmits the base station switch notification message to the third base station indicated by the identifier stored in the storage unit of the second base station,
wherein the base station control unit of the third base station, in response to receipt of the base station switch notification message from the second base station, transmits the base station switch acknowledgment message to the second base station,
wherein the second base station further comprises a path control unit that transmits, in response to receipt of the base station switch acknowledgment message from the third base station, a path switch message to the switching center, the path switch message indicating that the second control-plane path has been established between the user device and the second base station, and
wherein the switching center comprises a path control unit that transmits, after receipt of the path switch message, a path switch acknowledgment message to the second base station.

5. The radio communication system according to claim 3,
wherein the first base station further comprises a transferring unit that, if a control message for the user device is received from the third base station after the radio communication unit of the first base station has transmitted the radio connection reconfiguration message to the user device, transfers the control message to the second base station.

6. The radio communication system according to claim 3,
wherein the first base station further comprises a redirecting unit that, if a control message for the user device is received from the third base station after the radio communication unit of the first base station has transmitted the radio connection reconfiguration message to the user device, adds an identifier that indicates the second base station to a redirect message and transmits the redirect message to the third base station, the redirect message instructing that the control message be transmitted to the second base station.

7. The radio communication system according to claim 3, further comprising a fourth base station that has no control-plane path to the user device and coordinates with the third base station to communicate by radio with the user device,
wherein the base station control unit of the second base station, after receipt of the radio connection reconfiguration completion message from the user device, transmits a base station switch notification message to the fourth base station, the base station switch notification message indicating that the radio connection destination for the user device has been switched from the first base station to the second base station.

8. The radio communication system according to claim 3, further comprising a fourth base station that has no control-plane path to the user device and coordinates with the third base station to communicate by radio with the user device,
wherein the base station control unit of the third base station, in response to receipt of the base station switch notification message from the second base station, transmits the base station switch notification message to the fourth base station.

9. A radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein a first control-plane path is established between the first base station and the user device and a user-plane path is established between the user device and the gateway device via the third base station,
wherein the first base station comprises:
a determining unit that determines whether the user device should be handed over from the first base station, to which the user device is currently connected by radio, to the second base station; and
a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station,
wherein the second base station comprises:
a storage unit that stores the identifier of the third base station received from the first base station; and
a base station control unit that transmits, in response to receipt of the handover request message from the first base station, a handover response message to the first base station and transmits a base station switch notification message to the third base station indicated by the identifier, the base station switch notification message indicating that a radio connection destination for the user device is to be switched from the first base station to the second base station;
wherein the third base station comprises:
a base station control unit that transmits, in response to receipt of the base station switch notification message from the second base station, a base station switch acknowledgment message to the second base station,
wherein the first base station further comprises:
a radio control unit that transmits, after receipt of the handover response message from the second base station, a radio connection reconfiguration message to the user device, the radio connection reconfiguration message instructing establishment of a second control-plane path between the second base station and the user device, and
wherein the user device comprises:
a radio configuration unit that configures the user device, in accordance with the received radio connection reconfiguration message, such that the second control-plane path is established; and
a transmitting unit that transmits, after the radio configuration unit has configured the user device, a radio connection reconfiguration completion message to the second base station.

10. A radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein a first control-plane path is established between the first base station and the user device and a user-plane path is established between the user device and the gateway device via the third base station,
wherein the first base station comprises:
a determining unit that determines whether the user device should be handed over from the first base station, to which the user device is currently connected by radio, to the second base station; and
a base station control unit that adds to a handover request message, if the determining unit determines that the user device should be handed over, an identifier of the third base station, via which the user-plane path passes, and transmits the handover request message to the second base station, the handover request message requesting that the user device be handed over to the second base station,
wherein the second base station comprises:
a storage unit that stores the identifier of the third base station received from the first base station; and
a base station control unit that transmits, in response to receipt of the handover request message from the first base station, a handover response message to the first base station,
wherein the base station control unit of the first base station, in response to receipt of the handover response message from the second base station, transmits a base station switch notification message to the third base station, the base station switch notification message indicating that a radio connection destination for the user device is to be switched from the first base station to the second base station,
wherein the third base station comprises:
a base station control unit that transmits, in response to receipt of the base station switch notification message from the first base station, a base station switch acknowledgment message to the first base station,
wherein the first base station further comprises:
a radio control unit that transmits, after receipt of the handover response message from the third base station, a radio connection reconfiguration message to the user device, the radio connection reconfiguration message instructing establishment of a second control-plane path between the second base station and the user device, and
wherein the user device comprises:
a radio configuration unit that configures the user device, in accordance with the received radio connection reconfiguration message, such that the second control-plane path is established; and
a transmitting unit that transmits, after the radio configuration unit has configured the user device, a radio connection reconfiguration completion message to the second base station.

11. A communication control method for a radio communication system,
the radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein if a first control-plane path is established between the first base station and the user device and if a user-plane path is established between the user device and the gateway device via the third base station,
the communication control method comprises:
in the first base station,
determining whether the user device should be handed over from the first base station, to which the user device is currently connected by radio, to the second base station, and
adding to a handover request message, if it is determined that the user device should be handed over, an identifier of the third base station, via which the user-plane path passes, and transmitting the handover request message to the second base station, the handover request message requesting that the user device be handed over to the second base station;
in the second base station,
storing the identifier of the third base station received from the first base station, and
transmitting, in response to receipt of the handover request message from the first base station, a handover response message to the first base station;
in the first base station,
transmitting, after receipt of the handover response message from the second base station, a radio connection reconfiguration message to the user device, the radio connection reconfiguration message instructing establishment of a second control-plane path between the second base station and the user device;
in the user device,
configuring the user device, in accordance with the received radio connection reconfiguration message, such that the second control-plane path is established, and
transmitting, after the user device has been configured, a radio connection reconfiguration completion message to the second base station;
in the second base station,
transmitting, after receipt of the radio connection reconfiguration completion message from the user device, a base station switch notification message to the third base station indicated by the identifier stored by the second base station, the base station switch notification message indicating that a radio connection destination for the user device has been switched from the first base station to the second base station; and
in the third base station,
transmitting, in response to receipt of the base station switch notification message from the second base station, a base station switch acknowledgment message to the second base station.

12. A communication control method for a radio communication system,
the radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein if a first control-plane path is established between the first base station and the user device and if a user-plane path is established between the user device and the gateway device via the third base station,
the communication control method comprises:
in the first base station,
determining whether the user device should be handed over from the first base station, to which the user device is currently connected by radio, to the second base station, and
adding to a handover request message, if it is determined that the user device should be handed over, an identifier of the third base station, via which the user-plane path passes, and transmitting the handover request message to the second base station, the handover request message requesting that the user device be handed over to the second base station;
in the second base station,
storing the identifier of the third base station received from the first base station,
transmitting, in response to receipt of the handover request message from the first base station, a handover response message to the first base station, and
transmitting a base station switch notification message to the third base station indicated by the identifier, the base station switch notification message indicating that a radio connection destination for the user device is to be switched from the first base station to the second base station;
in the third base station,
transmitting, in response to receipt of the base station switch notification message from the second base station, a base station switch acknowledgment message to the second base station;
in the first base station,
transmitting, after receipt of the handover response message from the second base station, a radio connection reconfiguration message to the user device, the radio connection reconfiguration message instructing establishment of a second control-plane path between the second base station and the user device; and
in the user device,
configuring the user device, in accordance with the received radio connection reconfiguration message, such that the second control-plane path is established, and
transmitting, after the user device has been configured, a radio connection reconfiguration completion message to the second base station.

13. A communication control method for a radio communication system,
the radio communication system comprising:
a user device;
base stations that include a first base station, a second base station, and a third base station,
the first base station and the second base station exchanging control messages through control-plane paths that are logical paths established to the user device,
the third base station having no control-plane path to the user device;
a gateway device; and
a switching center that controls the logical paths,
wherein if a first control-plane path is established between the first base station and the user device and if a user-plane path is established between the user device and the gateway device via the third base station,
the communication control method comprises:
in the first base station,
determining whether the user device should be handed over from the first base station, to which the user device is currently connected by radio, to the second base station, and
adding to a handover request message, if it is determined that the user device should be handed over, an identifier of the third base station, via which the user-plane path passes, and transmitting the handover request message to the second base station, the handover request message requesting that the user device be handed over to the second base station;
in the second base station,
storing the identifier of the third base station received from the first base station, and
transmitting, in response to receipt of the handover request message from the first base station, a handover response message to the first base station;
in the first base station,
transmitting, in response to receipt of the handover response message from the second base station, a base station switch notification message to the third base station, the base station switch notification message indicating that a radio connection destination for the user device is to be switched from the first base station to the second base station;
in the third base station,
transmitting, in response to receipt of the base station switch notification message from the first base station, a base station switch acknowledgment message to the first base station;
in the first base station,
transmitting, after receipt of the handover response message from the third base station, a radio connection reconfiguration message to the user device, the radio connection reconfiguration message instructing establishment of a second control-plane path between the second base station and the user device; and
in the user device,
configuring the user device, in accordance with the received radio connection reconfiguration message, such that the second control-plane path is established, and
transmitting, after the user device has been configured, a radio connection reconfiguration completion message to the second base station.
